(19) Europäisches Patentamt
European Patent Office
Office européen des brevets

(11) Numéro de publication: **0 114 557**
**A1**

# (12) DEMANDE DE BREVET EUROPEEN

(21) Numéro de dépôt: **83402476.2**

(22) Date de dépôt: **20.12.83**

(51) Int. Cl.³: **C 08 F 10/02**
**C 08 F 4/64**

(30) Priorité: **24.12.82 FR 8221733**

(43) Date de publication de la demande: **01.08.84 Bulletin 84/31**

(84) Etats contractants désignés: **AT BE CH DE GB IT LI LU NL SE**

(71) Demandeur: **Société Chimique des Charbonnages S.A.**
**Tour Aurore Place des Reflets**
**F-92080 Paris La Défense Cédex 5(FR)**

(72) Inventeur: **Bujadoux, Karel**
**31 Avenue Van Pelt**
**F-62300 Lens(FR)**

(74) Mandataire: **Dubost, Thierry**
**Société Chimique des Charbonnages S.A. Service Propriété Industrielle B.P. No 49**
**F-62160 Bully Les Mines(FR)**

## (54) Système catalytique utilisable dans un procédé de polymerisation de l'ethylene.

(57) Système catalytique comprenant d'une part au moins un composé halogéné d'un métal de transition des groupes IV à VI de la Classification Périodique et de valence inférieure ou égale à 3 et d'autre part au moins un activateur métallique, le rapport atomique du métal de l'activateur au métal de transition étant compris entre 1 et 50, ledit système étant caractérisé en ce que l'activateur métallique a pour formule :

$$(AlR_2\ I)_x(B)_{1-x}$$

dans laquelle R est un radical alkyle ayant de 1 à 12 atomes de carbone, $0{,}1 \leq x \leq 0{,}8$ et B est choisi parmi les alkylsiloxalanes et les dialkylzincs.

Application à la (co)polymérisation de l'éthylène sous une pression comprise entre 300 et 2500 bars et à une température comprise entre 160°C et 320°C.

EP 0 114 557 A1

La présente invention concerne un système catalytique et un procédé pour la polymérisation de l'éthylène et la copolymérisation de l'éthylène avec des $\alpha$-oléfines.

De nombreuses variétés de catalyseurs de type Ziegler sont déjà connues pour la polymérisation de l'éthylène et des $\alpha$-oléfines. Ces catalyseurs comprennent généralement le constituant catalytique proprement dit, consistant en au moins un composé halogéné d'un métal de transition des groupes IV à V de la Classification Périodique, et un activateur choisi parmi les hydrures et les composés organométalliques des métaux des groupes I à III de la Classification Périodique. Le constituant catalytique comprenant le métal de transition peut, le cas échéant, être fixé sur un support inerte tel que l'alumine, la silice, la magnésie, les halogénures de magnésium, etc... En particulier le brevet français n° 2.117.434 décrit la polymérisation d'oléfines en présence d'un catalyseur préparé en réduisant un composé de métal de transition dans son état de valence maximale par un composé organomagnésien puis en l'activant par un mélange de trialkylaluminium et d'halogènure de dialkylaluminium, ce dernier étant de préférence dans un rapport molaire supérieur à 1 vis-à-vis du trialkylaluminium.

La présente invention se rapporte plus particulièrement à des activateurs entrant dans la composition de systèmes catalytiques de type Ziegler capables de polymériser l'éthylène, éventuellement en présence d'au moins une $\alpha$-oléfine, sous haute pression et à haute température. L'invention se rapporte également à un procédé de polymérisation de l'éthylène sous pression élevée (supérieure à 200 bars) et à température élevée (supérieure à 170° C) en présence de tels systèmes catalytiques. Un procédé de ce type a été décrit dans le brevet français n° 2.202.897.

La présente invention a pour premier objet un système catalytique comprenant d'une part au moins un composé halogéné d'un métal de transition des groupes IV à VI de la Classification Périodique et de valence inférieure ou égale à 3 et d'autre part au moins un activateur métallique, le rapport atomique du métal de l'activateur au métal de transition étant compris entre 1 et 50, ledit système étant caractérisé en ce que l'activateur métallique a pour formule :

$$(AlR_2\,I)_x\,(B)_{1-x}$$

dans laquelle R est un radical alkyle ayant de 1 à 12 atomes de carbone, $0,1 \leqslant x \leqslant 0,8$ et B est choisi parmi :

- les alkylsiloxalanes de formule

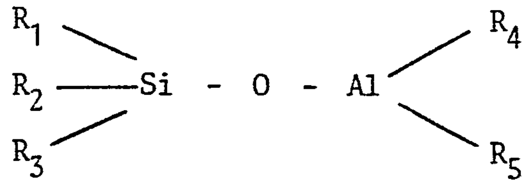

$R_1$, $R_2$, $R_3$ et $R_4$ étant des radicaux hydrocarbonés saturés ayant de 1 à 10 atomes de carbone, $R_5$ étant soit un radical hydrocarboné saturé ayant de 1 à 10 atomes de carbone soit un radical du type

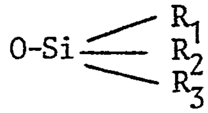

, et

- les dialkylzincs de formule $ZnR''_2$ dans laquelle R" est un radical alkyle ayant de 1 à 12 atomes de carbone.

Ainsi l'activateur métallique présent dans le système catalytique selon l'invention est un mélange comprenant de 10 à 80 % en moles d'au moins un monoiododialkylaluminium et de 20 à 90 % en moles d'au moins un composé B. Les dialkylzincs parmi lesquels peut être choisi le composé B sont des produits chimiques bien connus. Les alkylsiloxalanes sont également connus comme activateurs de polymérisation de l'éthylène par le brevet français n° 2.241.569. Parmi les composés halogénés de métal de transition utilisables dans les systèmes catalytiques selon la présente invention on peut citer le trichlorure de titane $TiCl_3$, éventuellement syncristallisé avec le chlorure d'aluminium sous la forme $TiCl_3, \frac{1}{3} AlCl_3$, le trichlorure de vanadium $VCl_3$, les composants complexes de formule

$$(TiCl_3, \frac{1}{3} AlCl_3)\ (MCl_3)_x\ (MgX_2)_y$$

dans laquelle $0,3 \leqslant x \leqslant 3$, $0 \leqslant y \leqslant 20$, M est un métal de transition des groupes VB et VIB de la Classification Périodique et X est un halogène, tels que décrits dans le brevet français n° 2.472.581, les composants complexes de formule

$$(MX_n)\ (AlX_3)_x\ (M'X_2)_y$$

dans laquelle X est un halogène choisi parmi le fluor, le chlore, le brome et l'iode, M est au moins un métal des groupes IVB à VIB de la Classification Périodique, M' est au moins un métal du groupe VIII de ladite Classification, $2 \leqslant n \leqslant 3$, $0 \leqslant x \leqslant \frac{1}{3}$ et $0,2 \leqslant y \leqslant 2$, tels que décrits dans le brevet français n° 2.492.831, les composés comprenant en outre, dans un rapport molaire compris entre 0,2 et 2 inclusivement par rapport audit métal de transition, au moins un composé aromatique du silicium de formule $\emptyset_n\ Si(OH)_{4-n}$ dans laquelle $\emptyset$ est un noyau aromatique ou polyaromatique éventuellement substitué ayant de 6 à 15 atomes de carbone et $1 \leqslant n \leqslant 3$, tels que décrits dans le brevet européen n° 53.956, les composés complexes

de formule $M_n Mg(OR)_{2-m} X_{m+4n}$ dans laquelle M est le métal de transition, X est un halogène, R est un radical alkyle comprenant de 1 à 4 atomes de carbone, $0 < m < 2$ et $0,05 < n < 1$, tels que décrits dans le brevet européen n° 70.749 au nom du même demandeur, les composants de formule :

$$(MX_a)\ (MgX_2)_b\ (RMgX)_c\ (HMgX)_d$$

dans laquelle M est un métal des groupes IV B et V B de la Classification Périodique, X est un halogène, R est un radical hydrocarboné, $2 \leqslant a \leqslant 3,5$ ; $1 \leqslant b \leqslant 30$, $1 < c \leqslant 8$ et $0 \leqslant d \leqslant 10$, tels que décrits dans le brevet européen n° 25.761.

Les composés halogénés de métal de transition utilisables dans les systèmes catalytiques selon la présente invention peuvent en outre être fixés sur un support convenablement choisi tel que, entre autres, l'alumine, la silice, la magnésie, les halogénures de magnésium et de manganèse.

La présente invention a pour second objet un procédé de polymérisation de l'éthylène et de copolymérisation de l'éthylène avec des -oléfines, sous une pression comprise entre 300 et 2 500 bars, à une température comprise entre 160° et 320°C, en présence d'un système catalytique comprenant d'une part au moins un composé halogéné d'un métal de transition des groupes IV à VI de la Classification Périodique et de valence inférieure ou égale à 3 et d'autre part au moins un activateur métallique, le rapport atomique du métal de l'activateur au métal de transition étant compris entre 1 et 6, le temps de séjour dudit système catalytique dans le réacteur de polymérisation étant compris entre 2 et 100 secondes, caractérisé en ce que l'activateur métallique a pour formule

$$(AlR_2I)_x\ (B)_{1-x}$$

dans laquelle R est un radical alkyle ayant de 1 à 12 atomes de carbone, $0,1 \leqslant x \leqslant 0,5$ et B est choisi parmi :

(a) les trialkylaluminiums de formule $AlR'_3$ dans laquelle R' est un radical alkyle ayant de 1 à 12 atomes de carbone,

(b) les alkylsiloxalanes de formule

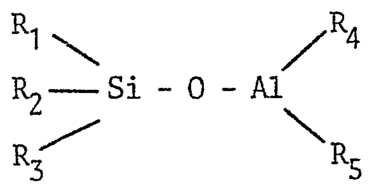

$R_1$, $R_2$, $R_3$ et $R_4$ étant des radicaux hydrocarbonés saturés ayant de 1 à 10 atomes de carbone, $R_5$ étant soit un radical hydrocarboné saturé ayant de 1 à 10 atomes de carbone soit un radical du type

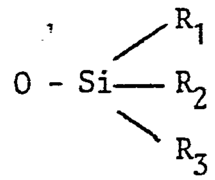 , et

(c) les dialkylzincs de formule $ZnR''_2$ dans laquelle R" est un radical alkyle ayant de 1 à 12 atomes de carbone.

Le temps de séjour est choisi en fonction de la température dans le réacteur en ce sens qu'il est d'autant plus élevé que la température est plus basse. Ce procédé peut mettre en jeu, notamment lorsque la température et/ou la pression de polymérisation ne sont pas très élevées, la présence d'un hydrocarbure inerte ayant de préférence moins de 5 atomes de carbone tel que par exemple propane ou butane.

Lorsque dans le procédé haute pression on utilise un réacteur autoclave ou tubulaire ayant plusieurs zones réactionnelles, il pourra être avantageux, en vue de produire certaines qualités de polymères, d'adopter une disposition particulière de l'installation de polymérisation comme par exemple l'une de celles décrites dans les brevets français n° 2.346.374 et 2.385.745. Souvent il sera utile pour contrôler l'indice de fluidité du polymère, notamment du polyéthylène, d'effectuer la polymérisation en présence d'un agent de transfert de chaîne comme l'hydrogène. Dans le procédé haute pression, cet agent sera utilisé à raison de 0,04 à 2 % en volume par rapport à l'éthylène. Dans d'autres cas, notamment lorsqu'on veut fabriquer un polymère d'éthylène ayant un indice de fluidité compris entre 0,1 et 2 et un indice de polydispersité supérieur à 10, il sera utile d'effectuer la polymérisation en l'absence totale d'hydrogène et en adoptant une disposition particulière de l'installation comme par exemple celle décrite dans la demande de brevet européen publiée sous le n° 0 013 246.

Le procédé selon l'invention permet, en ce qui concerne la polymérisation ou la copolymérisation de l'éthylène, de produire toute une gamme de polymères dont la masse volumique est comprise entre 0,905 et 0,960 g/cm3 et dont l'indice de fluidité est compris entre 0,1 et 100 dg/min environ. Les polymères de masse volumique relativement basse, par exemple comprise entre 0,905 et 0,935 g/cm3, sont obtenus en copolymérisant l'éthylène avec une α-oléfine ayant de 3 à 8 atomes de carbone, par exemple le propène à raison de 15 à 35 % en poids ou bien le butène-1 à raison de 15 à 60 % en poids. Les polymères de masse volumique intermédiaire, par exemple comprise entre 0,935 et 0,945 g/cm3, sont obtenus en copolymérisant l'éthylène avec une α-oléfine ayant de 3 à 8 atomes de carbone, par exemple le propène à raison de 5 à 15 % en poids, ou bien le butène-1 à raison de 8 à 20 % en poids.

Le procédé selon l'invention permet d'améliorer la qualité et de modifier certaines caractéristiques, en particulier d'augmenter la masse volumique du polymère produit. D'autres avantages de l'invention apparaîtront à la lecture des exemples suivants donnés à titre illustratif et non limitatif.

EXEMPLES 1 à 4

On polymérise l'éthylène dans un réacteur autoclave sous une pression de 600 bars et à une température de 230°C, en présence de 0,25 % en moles d'hydrogène et en présence d'un système catalytique comprenant :

- d'une part un composé A de formule $TiCl_3, \frac{1}{3} AlCl_3, 6 MgCl_2$,
- d'autre part un activateur de formule $\left[Al(C_2H_5)_2I\right]_x \left[Al(C_2H_5)_3\right]_{1-x}$ dans laquelle x varie d'un exemple à l'autre, comme on le voit dans le tableau I.

Le temps de séjour du système catalytique dans le réacteur est de 30 secondes et le rapport atomique Al/Ti est égal à 6.

Dans le tableau I ci-après, on trouve rassemblés les résultats de la polymérisation, à savoir le rendement catalytique $R_c$ exprimé en kilogrammes de polymère par milliatome de titane, la masse volumique (en g/cm3) et l'indice de fluidité I.F. (en dg/min) du polymère, ainsi que sa masse moléculaire moyenne en nombre Mn déterminée par chromatographie de perméation de gel.

EXEMPLES 5 à 7

On polymérise l'éthylène dans un réacteur autoclave sous une pression de 800 bars et à une température de 240°C, en présence de 0,1 % en moles d'hydrogène et en présence d'un système catalytique comprenant d'une part le composé A et d'autre part un activateur de formule :

$$\left[Al(C_2H_5)_2I\right]_x \left[B\right]_{1-x}.$$

Le composé B est respectivement le triéthylaluminium (exemple 5), le diméthyléthyldiéthylsiloxalane (exemple 6) et le diéthylzinc (exemple 7). Le temps de séjour du système catalytique dans le réacteur est de 30 secondes et le rapport atomique Al/Ti est égal à 3 (exemples 5 et 6) ou 2 (exemple 7). On obtient dans ces conditions les résultats contenus dans le tableau II ci-après. Comme on le comprendra aisément, l'exemple 5 est donné à titre comparatif.

EXEMPLE 8

On polymérise l'éthylène dans un réacteur autoclave comportant 3 zones de volume équivalent, sous une pression de 1000 bars et en l'absence d'hydrogène, les températures dans les 3 zones étant respectivement de 180°, 190° et 235°C, en présence d'un même système catalytique qu'à l'exemple

4. Le temps de séjour du système catalytique dans le réacteur est de 43 secondes et le rapport atomique Al/Ti est égal à 3. On obtient dans ces conditions les résultats suivants :

$R_c$ = 7,4 kg/milliatome Ti   $\rho$ = 0,961 g/cm3

I.F. = 1,0 dg/min

EXEMPLE 9

On copolymérise un mélange de 65 % en poids d'éthylène et de 35 % en poids de butène-1 dans un réacteur autoclave sous une pression de 800 bars et à une température de 240°C, en présence de 0,1 % en moles d'hydrogène et en présence d'un système catalytique comprenant :

- d'une part un composé de formule : $(TiCl_3, \frac{1}{3} AlCl_3)$ $(VCl_3)$
- d'autre part l'activateur utilisé à l'exemple 4.

Le temps de séjour du système catalytique dans le réacteur est de 40 secondes et le rapport atomique Al/Ti + V est égal à 3. On obtient dans ces conditions les résultats suivants (C4 désigne la proportion en pourcentage de motifs dérivés du butène-1 dans le copolymère) :

$R_c$ = 3,0 kg/milliatome Ti   $\rho$ = 0,928 g/cm3

I.F. = 1,5 dg/min   $M_n$ = 26 400

C4 = 2,4 % (en moles)

TABLEAU I

| Exemple | x | $\rho$ | I.F. | $R_c$ | $M_n$ |
|---|---|---|---|---|---|
| 1 | 0,15 | 0,954 | 8,0 | 9,5 | 12 000 |
| 2 | 0,25 | 0,957 | 7,3 | 9,8 | 14 000 |
| 3 | 0,35 | 0,959 | 12,6 | 8,5 | 12 000 |
| 4 | 0,50 | 0,966 | 10,0 | 7,7 | 14 000 |

TABLEAU II

| Exemple | x | $\rho$ | I.F. | $R_c$ | $M_n$ |
|---|---|---|---|---|---|
| 5 | 0,75 | 0,966 | 11,6 | 5,0 | 10 800 |
| 6 | 0,50 | 0,964 | 7,0 | 7,9 | 12 700 |
| 7 | 0,42 | 0,954 | 0,9 | 8,4 | 17 000 |

REVENDICATIONS

1. Système catalytique comprenant d'une part au moins un composé halogéné d'un métal de transition des groupes IV à VI de la Classification Périodique et de valence inférieure ou égale à 3 et d'autre part au moins un activateur métallique, le rapport atomique du métal de l'activateur au métal de transition étant compris entre 1 et 50, ledit système étant caractérisé en ce que l'activateur métallique a pour formule :

$$(AlR_2I)_x\ (B)_{1-x}$$

dans laquelle R est un radical alkyle ayant de 1 à 12 atomes de carbone, $0{,}1 \leqslant x \leqslant 0{,}8$ et B est choisi parmi :

- les alkylsiloxalanes de formule

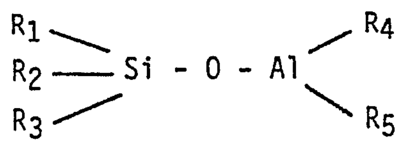

$R_1$, $R_2$, $R_3$ et $R_4$ étant des radicaux hydrocarbonés saturés ayant de 1 à 10 atomes de carbone, $R_5$ étant soit un radical hydrocarboné saturé ayant de 1 à 10 atomes de carbone soit un radical du type

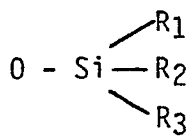

, et

- les dialkylzincs de formule $ZnR''_2$ dans laquelle R" est un radical alkyle ayant de 1 à 12 atomes de carbone.

2. Système catalytique selon la revendication 1, caractérisé en ce que le composé halogéné de métal de transition est choisi parmi les trichlorure de titane, éventuellement syncristallisé avec le chlorure d'aluminium, et le trichlorure de vanadium.

3. Système catalytique selon la revendication 1, caractérisé en ce que le composé halogéné de métal de transition est un composant complexe de formule

$$(TiCl_3,\ 1/3\ AlCl_3)\ (MCl_3)_x\ (MgX_2)_y$$

dans laquelle $0{,}3 \leqslant x \leqslant 3$, $0 \leqslant y \leqslant 20$, M est un métal de transition des groupes VB et VIB de la Classification Périodique et X est un halogène.

4. Système catalytique selon la revendication 1, caractérisé en ce que le composé halogéné de métal de transition est un composant complexe de formule

$$(MX_n)\ (AlX_3)_x\ (M'X_2)_y$$

dans laquelle X est un halogène choisi parmi le fluor, le chlore, le brome et l'iode, M est au moins un métal des groupes IVB à VIB de la Classification Périodique, M' est au moins un métal du groupe VIII de ladite Classification, $2 \leqslant n \leqslant 3$, $0 \leqslant x \leqslant 1/3$ et $0{,}2 \leqslant y \leqslant 2$.

5. Système catalytique selon la revendication 1, caractérisé en ce que le composé halogéné de métal de transition est un composé complexe de formule $M_nMg(OR)_{2-m}X_{m+4n}$ dans laquelle M est le métal de transition, X est un halogène, R est un radical alkyle comprenant de 1 à 4 atomes de carbone, $0 < m < 2$ et $0,05 < n < 1$.

6. Système catalytique selon la revendication 1, caractérisé en ce que le composé halogéné de métal de transition est un composant de formule

$$(MX_a)\ (MgX_2)_b\ (RMgX)_c\ (HMgX)_d$$

dans laquelle M est un métal des groupes IVB et VB de la Classification Périodique, X est un halogène, R est un radical hydrocarboné, $2 \leqslant a \leqslant 3,5$ ; $1 \leqslant b \leqslant 30$, $1 < c \leqslant 8$ et $0 \leqslant d \leqslant 10$.

7. Système catalytique selon l'une des revendications 1 à 6, caractérisé en ce que le composé halogéné de métal de transition comprend en outre, dans un rapport molaire compris entre 0,2 et 2 inclusivement par rapport audit métal de transition, au moins un composé aromatique du silicium de formule $\emptyset_n\ Si(OH)_{4-n}$ dans laquelle $\emptyset$ est un noyau aromatique ou polyaromatique éventuellement substitué ayant de 6 à 15 atomes de carbone et $1 \leqslant n \leqslant 3$.

8. Système catalytique selon l'une des revendications 1 à 7, caractérisé en ce que le composé halogéné de métal de transition est en outre fixé sur un support choisi parmi l'alumine, la silice, la magnésie, les halogénures de magnésium et de manganèse.

9. Procédé de polymérisation de l'éthylène et de copolymérisation de l'éthylène avec des $\alpha$-oléfines, sous une pression comprise entre 300 et 2500 bars, à une température comprise entre 160° et 320°C, en présence d'un système catalytique comprenant d'une part au moins un composé halogéné d'un métal de transition des groupes IV à VI de la Classification Périodique et de valence inférieure ou égale à 3 et d'autre part au moins un activateur métallique, le rapport atomique du métal de l'activateur au métal de transition étant compris entre 1 et 6, le temps de séjour dudit système catalytique dans le réacteur de polymérisation étant compris entre 2 et 100 secondes, caractérisé en ce que l'activateur métallique a pour formule :

$$(AlR_2I)_x\ (B)_{1-x}$$

dans laquelle R est un radical alkyle ayant de 1 à 12 atomes de carbone, $0,1 \leqslant x \leqslant 0,5$ et B est choisi parmi :

(a) les trialkylaluminiums de formule $AlR'_3$ dans laquelle R' est un radical alkyle ayant de 1 à 12 atomes de carbone,

(b) les alkylsiloxalanes de formule

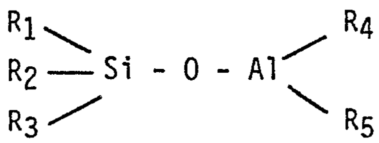

$R_1$, $R_2$, $R_3$ et $R_4$ étant des radicaux hydrocarbonés saturés ayant de 1 à 10 atomes de carbone, $R_5$ étant soit un radical hydrocarboné saturé ayant de 1 à 10 atomes de carbone soit un radical du type

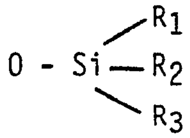

, et

(c) les dialkylzincs de formule $ZnR''_2$ dans laquelle R" est un radical alkyle ayant de 1 à 12 atomes de carbone.

Office européen des brevets

# RAPPORT DE RECHERCHE EUROPEENNE

0114557

Numéro de la demande

EP 83 40 2476

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. 3) |
|---|---|---|---|
| D,X<br>Y | FR-A-2 117 434 (SHELL)<br>* Revendications 1,8-17; exemple 1; page 13, tableau I, essai 9 * | 9 | C 08 F 10/02<br>C 08 F 4/64 |
| | --- | | |
| D,Y | FR-A-2 202 897 (ETHYLENE PLASTIQUE)<br>* Revendication 1 * | 9 | |
| | --- | | |
| A | FR-A-2 241 569 (ETHYLENE-PLASTIQUE)<br>* Revendications 1-6 * | 1,9 | |
| | --- | | |
| A | FR-A-2 297 217 (NIPPON OIL)<br>* Revendication 1 * | 1,9 | |
| | ----- | | DOMAINES TECHNIQUES RECHERCHES (Int. Cl. 3) |
| | | | C 08 F |

Le présent rapport de recherche a été établi pour toutes les revendications

| Lieu de la recherche | Date d'achèvement de la recherche | Examinateur |
|---|---|---|
| LA HAYE | 13-04-1984 | WEBER H. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03.82